# FASCICULE DE BREVET EUROPEEN

(11) **EP 3 296 200 B1**
(45) Date de publication et mention de la délivrance du brevet: **10.04.2019**
(21) Numéro de dépôt: 17188296.2
(22) Date de dépôt: 29.08.2017
(51) Int. Cl.: B64C 27/12, B64D 35/00, F16H 1/14

(54) **SYSTEME MECANIQUE DE TRANSMISSION D'UN MOUVEMENT ET AERONEF EQUIPE D'UN SYSTEME CORRESPONDANT**
MECHANISCHES SYSTEM ZUR BEWEGUNGSÜBERTRAGUNG, UND MIT EINEM SOLCHEN SYSTEM AUSGESTATTETES LUFTFAHRZEUG
A MECHANICAL SYSTEM FOR TRANSMITTING MOTION AND AN AIRCRAFT FITTED WITH A CORRESPONDING SYSTEM

(30) Priorité: 09.09.2016 FR 1601331
(43) Date de publication de la demande: 21.03.2018
(73) Titulaire: Airbus Helicopters, 13725 Marignane Cedex (FR)
(72) Inventeur: DE MEERSCHMAN, Olivier, 13410 Lambesc (FR); GATTI, Matthias, 13127 Vitrolles (FR)
(74) Mandataire: GPI & Associés

(56) Documents cités:
- WO-A1-2011/100499
- DE-B- 1 003 597
- US-B1- 6 302 356

## Description

La présente invention se rapporte au domaine des moyens de transmission d'un mouvement de rotation entre au moins deux arbres.

Plus particulièrement, l'invention concerne un système mécanique comportant un engrenage conique d'une chaine cinématique principale pour transmettre un couple moteur et un pignon accessoire supplémentaire coopérant avec une roue conique de l'engrenage conique.

De façon connue, les systèmes mécaniques de ce type sont alors conçus pour limiter le glissement et l'usure entre les différentes dents de chacun des pignons et de la roue conique. Pour garantir un tel résultat, les axes de rotation respectifs doivent alors nécessairement être agencés relativement les uns par rapport aux autres de manière à être tous les trois concourants. En outre, de tels systèmes mécaniques ont notamment été décrits dans les documents DE 1 003 597 (qui montre les caractéristiques du préambule de la revendication 1), WO 2011 / 100499 et US 6 302 356.

Cependant, pour que les trois axes de rotation soient concourants cela impose alors une contrainte sur le diamètre et/ou sur le nombre de dents et/ou sur l'orientation de l'axe du pignon accessoire coopérant avec les dents de la roue conique de l'engrenage. Il n'est alors pas possible d'adapter directement le rapport de réduction de la transmission et il est nécessaire d'utiliser des moyens supplémentaires de réduction de la vitesse de rotation du pignon et/ou, accessoirement, des renvois d'angles supplémentaires pour modifier l'orientation d'un arbre de transmission entrainé en rotation par ce pignon accessoire.

De tels systèmes mécaniques comportent alors un nombre de pièces ou d'organes mécaniques important ce qui n'est pas optimum en termes de masse totale et de coût notamment.

La présente invention a alors pour objet de proposer un système mécanique permettant de s'affranchir des limitations mentionnées ci-dessus. Un tel système mécanique va donc à l'encontre de la théorie utilisée usuellement par l'homme du métier pour la conception des engrenages coniques mais il permet d'en limiter drastiquement sa masse et son coût sans toutefois compromettre sa longévité et sa fiabilité.

L'invention concerne donc un système mécanique de transmission d'un mouvement de rotation entre au moins deux arbres mobiles en rotation respectivement autour d'un premier axe et d'un deuxième axe, ces premier et deuxième axes étant concourants entre eux. Un tel système mécanique comporte un engrenage conique composé d'un premier pignon conique muni de dents mobile en rotation autour du premier axe et d'une roue conique munie de dents mobile en rotation autour du deuxième axe, les dents respectives du premier pignon conique et de la roue conique étant aptes à coopérer de façon complémentaire les unes avec les autres. Le premier pignon conique, dit "pignon de puissance", présente une première surface primitive de définition de forme conique, la roue conique présente quant à elle une deuxième surface primitive de définition de forme conique.

Un positionnement relatif des premier et deuxième axes concourants permet alors de définir, lors de l'engrènement entre le pignon de puissance et la roue conique, une première surface primitive de fonctionnement de forme conique se rapportant au pignon de puissance et une deuxième surface primitive de fonctionnement de forme conique se rapportant à la roue conique, les première et deuxième surfaces primitives de fonctionnement étant définies respectivement par un sommet commun S agencé à l'intersection entre les premier et deuxième axes et par un cercle correspondant à l'un des cercles primitifs respectifs du pignon de puissance et de la roue conique. Par définition, de telles première et deuxième surfaces primitives de fonctionnement roulent alors sans glisser l'une sur l'autre lors du fonctionnement d'un tel engrenage conique.

De plus, les cercles primitifs sont formés respectivement par des cercles tangents, ces cercles étant également centrés sur les premier et deuxième axes ou, autrement dit, ces cercles tangents sont inscrits dans des plans perpendiculaires respectivement aux premier et deuxième axes. De tels cercles primitifs présentent alors des diamètres primitifs dont le rapport est égal au rapport entre le nombre de dents du pignon de puissance et le nombre de dents de la roue conique.

Par ailleurs, la première surface primitive de fonctionnement est choisie identique à la première surface primitive de définition et la deuxième surface primitive de fonctionnement est choisie identique à la deuxième surface primitive de définition.

En outre, le système mécanique comporte également un autre pignon conique dit "pignon accessoire" muni de dents engrenant avec les dents de la roue conique pour transmettre un mouvement de rotation à un troisième arbre mobile en rotation autour d'un troisième axe, le pignon accessoire présentant une troisième surface primitive de définition de forme conique.

Ce système mécanique est remarquable en ce que le pignon accessoire présente une troisième surface primitive de fonctionnement obtenue par un positionnement relatif des deuxième et troisième axes permettant un engrènement du pignon accessoire par la roue conique, cette troisième surface primitive de fonctionnement étant choisie distincte de la troisième surface primitive de définition du pignon accessoire, la troisième surface primitive de fonctionnement étant définie par, d'une part un troisième sommet S' agencé à une intersection entre le troisième axe et le deuxième axe et, d'autre part un cercle primitif du pignon accessoire, le troisième sommet S' étant disjoint du sommet commun S.

Autrement dit, la roue conique présente deux surfaces primitives de fonctionnement distinctes. La deuxième surface primitive de fonctionnement est définie par l'engrènement des dents la roue conique avec les dents du pignon de puissance et une quatrième surface primitive de fonctionnement est définie par l'engrènement des dents de la roue conique avec les dents du pignon accessoire. Dans chaque cas, les deux surfaces primitives de fonctionnement d'un même couple roulent sans glisser l'une sur l'autre.

Par ailleurs, le troisième axe autour duquel tourne le pignon accessoire n'est pas concourant avec les premier et second axes. Comme déjà évoqué, un tel agencement particulier n'est pas optimum pour transmettre un couple maximum et va donc à l'encontre des préjugés de l'homme du métier pour concevoir un tel système mécanique comportant à la fois un engrenage conique et un pignon accessoire supplémentaire. Cependant, une telle limitation n'est pas gênante car la puissance consommée par les organes entrainés en rotation via le pignon accessoire est très inférieure à la puissance consommée par les organes entrainés en rotation par la roue conique. Par exemple, la puissance consommée par les organes entrainés en rotation via le pignon accessoire peut être inférieure ou égale à 10% de la puissance consommée par les organes entrainés en rotation par la roue conique.

Bien entendu, le pignon de puissance, la roue conique et le pignon accessoire peuvent avoir respectivement un nombre de dents différent les uns des autres de manière à par exemple réduire la vitesse de rotation des arbres en sortie du système mécanique et plus précisément entre les premier et troisième axes de rotation d'un tel système mécanique.

Avantageusement, la forme conique de la troisième surface primitive de définition peut être définie par un quatrième sommet S" et par un demi-angle de définition δ_{def} au quatrième sommet S", la troisième surface primitive de fonctionnement présentant un demi-angle de fonctionnement δ_{fonc} au troisième sommet S', le demi-angle de définition δ_{def}.étant distinct du demi-angle de fonctionnement δ_{fonc}.

Dans ce cas, la troisième surface primitive de définition du pignon accessoire est alors tangente à la deuxième surface primitive de définition de la roue conique.

En pratique, une différence en valeur absolue entre le demi-angle de définition δ_{def} et le demi-angle de fonctionnement δ_{fonc} peut être comprise entre 1° et 60°.

En effet, une telle valeur de la différence en valeur absolue est adaptée pour permettre un positionnement angulaire optimum du pignon accessoire et permet de réaliser directement un rapport de réduction de la vitesse permettant de s'affranchir d'un organe de réduction de vitesse supplémentaire.

Plus particulièrement, cette différence en valeur absolue entre le demi-angle de définition δ_{def} et le demi-angle de fonctionnement δ_{fonc} peut être préférentiellement comprise entre 10° et 60°.

Selon une caractéristique avantageuse de l'invention, les dents du pignon accessoire peuvent présenter chacune une pluralité de sections transversales de formes distinctes les unes des autres, la pluralité de sections transversales étant agencée respectivement dans des plans de coupe P, P' orientés sensiblement perpendiculairement par rapport au troisième axe. Par suite, les plans de coupe P, P' sont orientés perpendiculairement à une direction longitudinale dans laquelle chaque dent s'étend.

Autrement dit, la forme de la section de chaque dent peut varier le long de cette dent. Un tel agencement permet en effet d'adapter le positionnement relatif de la surface de contact entre les dents de la roue conique et les dents du pignon accessoire en fonction notamment du positionnement relatif entre le deuxième axe et le troisième axe.

Avantageusement, au moins au niveau d'une face externe de tête des dents du pignon accessoire, chaque dent peut présenter une épaisseur de tête e₁, e₂ mesurée respectivement dans un plan de coupe P, P' orienté sensiblement perpendiculairement par rapport au troisième axe, cette épaisseur de tête variant plus le plan de mesure est proche du quatrième sommet S".

En d'autres termes, le profil des dents du pignon accessoire peut s'affiner ou s'élargir au niveau de la tête des dents en se rapprochant du quatrième sommet S".

En pratique, les premier et deuxième axes peuvent être orthogonaux.

De façon alternative ou additionnelle, les deuxième et troisième axes peuvent également être orthogonaux.

Enfin selon une autre caractéristique avantageuse de l'invention, les premier et troisième axes peuvent être parallèles.

Un tel agencement peut en effet présenter un intérêt pour simplifier la conception de la chaine cinématique d'une machine ou d'un véhicule sur lequel est rapporté un tel système mécanique de transmission d'un mouvement de rotation.

Par ailleurs selon un premier exemple de réalisation de l'invention, les premier, deuxième et troisième axes peuvent être coplanaires. Un tel agencement peut également se révéler intéressant pour simplifier la conception de la chaine cinématique de transmission d'un mouvement de rotation entre les différents axes.

Selon un second exemple de réalisation de l'invention, les premier, deuxième et troisième axes peuvent être non coplanaires. Dans ce cas, le système mécanique de transmission permet alors également de modifier l'orientation angulaire du troisième axe de manière distincte par rapport à un plan défini par les premier et deuxième axes.

Par suite, la présente invention a aussi pour objet un aéronef comportant au moins un moteur et au moins un rotor pour réaliser une propulsion et/ou une sustentation de cet aéronef.

Selon l'invention cet aéronef est remarquable en ce qu'il comporte au moins un système mécanique tel que décrit précédemment, le système mécanique permettant de transmettre un mouvement de rotation entre un arbre moteur du (ou des) moteur(s) et un arbre récepteur du (ou des) rotor(s).

L'invention et ses avantages apparaîtront avec plus de détails dans le cadre de la description qui suit avec des exemples donnés à titre illustratif en référence aux figures annexées qui représentent :
- la figure 1, une vue en perspective d'un aéronef équipé d'un système mécanique, conformément à l'invention,
- la figure 2, une vue en perspective de principe du fonctionnement d'un système mécanique selon l'art antérieur,
- les figures 3 à 5, différentes vues en perspective de principe du fonctionnement selon un premier exemple de réalisation d'un système mécanique à axes coplanaires, conformément à l'invention,
- la figure 6, une vue de détail en perspective des dents d'un pignon accessoire d'un système mécanique conforme à l'invention, et
- la figure 7, une vue en perspective de principe du fonctionnement selon un second exemple de réalisation d'un système mécanique à axes non coplanaires, conformément à l'invention.

Les éléments présents dans plusieurs figures distinctes sont affectés d'une seule et même référence.

Comme déjà évoqué, l'invention se rapporte à un système mécanique et un aéronef équipé d'un tel système mécanique.

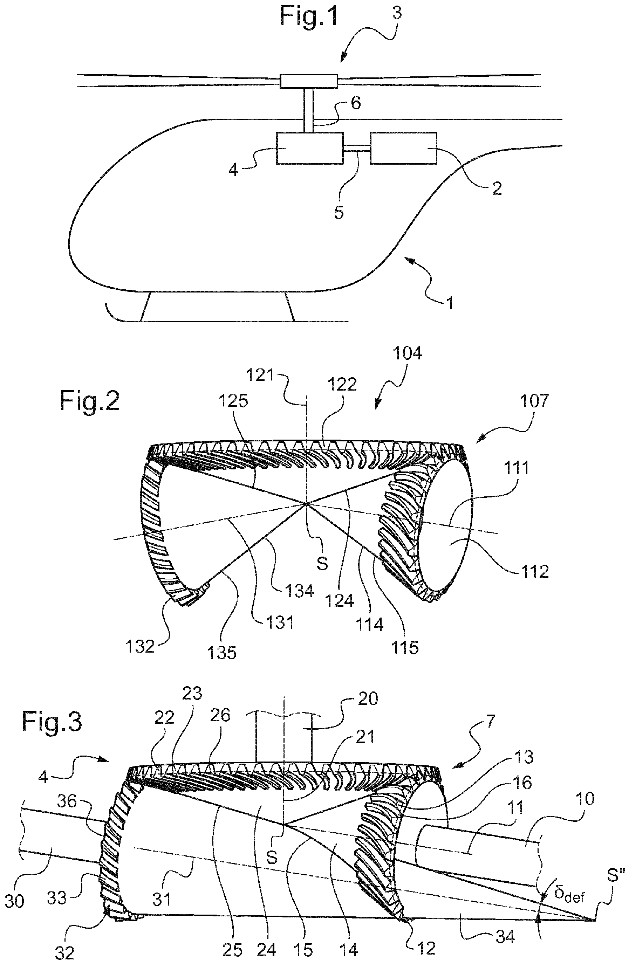

Tel que représenté à la figure 1, l'aéronef 1 peut se présenter sous la forme d'un giravion et comporter un moteur 2 tel un moteur à combustion ou encore un turboréacteur. Le moteur 2 permet alors d'entraîner en rotation un arbre moteur 5 et le système mécanique 4 permet de transmettre un mouvement de rotation de l'arbre moteur 5 à un arbre récepteur 6 avec une modification de l'orientation angulaire des axes de rotation respectifs des arbres moteur 5 et récepteur 6.

Un tel arbre récepteur 6 permet alors d'entraîner en rotation au moins un rotor 3 muni de pales pour permettre une sustentation et/ou une propulsion de l'aéronef 1. Avantageusement, un système mécanique 4 peut également permettre de réaliser une réduction de la vitesse de rotation de l'arbre récepteur 6 par rapport à la vitesse de rotation de l'arbre moteur 5.

Selon l'art antérieur et tel que représenté à la figure 2, un système mécanique 104 peut comporter un engrenage conique 107 comportant un premier pignon conique 112 mobile en rotation autour un premier axe 111 et une roue conique 122 mobile en rotation autour d'un deuxième axe 121. En outre, un tel système mécanique 104 peut également comporter un deuxième pignon conique 132 entraîné en rotation par la roue conique 122, ce deuxième pignon conique 132 étant mobile en rotation autour d'un troisième axe 131.

Dans ce cas, la théorie permettant de faire coopérer de façon complémentaire les dents du deuxième pignon conique 132 avec celles de la roue conique 122 impose aux concepteurs de ce type de systèmes mécaniques 104 de rendre concourants les trois axes 111, 121, et 131 au sommet S.

Par suite, les surfaces primitives de définition 114, 134 et 124 respectives des premier et deuxième pignons coniques 112 et 132 et de la roue conique 122 sont alors confondues avec les surfaces primitives de fonctionnement 115, 125 et 135 respectives des premier et deuxième pignons coniques 112 et 132 et de la roue conique 122.

Tel que représenté aux figures 3 à 5, selon un premier exemple de réalisation le système mécanique 4 de transmission permet de transmettre un mouvement de rotation entre un premier arbre 10 et un deuxième arbre 20. Ces arbres 10 et 20 sont mobiles en rotation respectivement autour d'un premier axe 11 et d'un deuxième axe 21 concourants entre eux.

Ce système mécanique 4 est muni d'un engrenage conique 7 comportant un premier pignon conique 12, dit "pignon de puissance", muni de dents 13. Un tel pignon de puissance 12 est alors mobile en rotation autour d'un premier axe 11. L'engrenage conique 7 comporte alors également une roue conique 22 munie de dents 23. Cette roue conique 22 est quant à elle mobile en rotation autour d'un deuxième axe 21.

Les dents 13 et 23 respectives du premier pignon de puissance 12 et de la roue conique 22 peuvent être de forme droite ou encore hélicoïdale et sont aptes à coopérer de façon complémentaire les unes avec les autres. En outre, le pignon de puissance 12 présente une première surface primitive de définition 14 de forme conique tandis que la roue conique 22 présente une deuxième surface primitive de définition 24 de forme conique.

Le positionnement relatif des premier et deuxième axes 11 et 21 concourants permet alors de définir, lors de l'engrènement entre le pignon de puissance 12 et la roue conique 22, une première surface primitive de fonctionnement 15 de forme conique se rapportant au pignon de puissance 12 et une deuxième surface primitive de fonctionnement 25 de forme conique se rapportant à la roue conique 22.

De telles première et deuxième surfaces primitives de fonctionnement 15 et 25 sont définies respectivement par un sommet commun S agencé à l'intersection entre les premier et deuxième axes 11 et 21 et un cercle correspondant à l'un des cercles primitifs 16 et 26 respectifs du pignon de puissance 12 et de la roue conique 22.

Au surplus, le système mécanique 4 comporte un deuxième pignon conique 32, dit "pignon accessoire" muni de dents 33 engrenant avec les dents 23 de la roue conique 22 pour transmettre un mouvement de rotation à un troisième arbre 30 mobile en rotation autour d'un troisième axe 31. Selon ce premier exemple de réalisation du système mécanique 4, de tels premier, deuxième et troisième axes 11, 21 et 31 sont agencés de manière coplanaire les uns par rapport aux autres.

Tel que représenté à la figure 3, un tel pignon accessoire 32 présente alors également une troisième surface primitive de définition 34 de forme conique. Une telle troisième surface primitive de définition 34 est plus particulièrement un cône tangent à la deuxième surface primitive de définition 24 relative à la roue conique 22. Une telle troisième surface primitive de définition 34 comporte alors une symétrie de révolution autour du troisième axe 31.

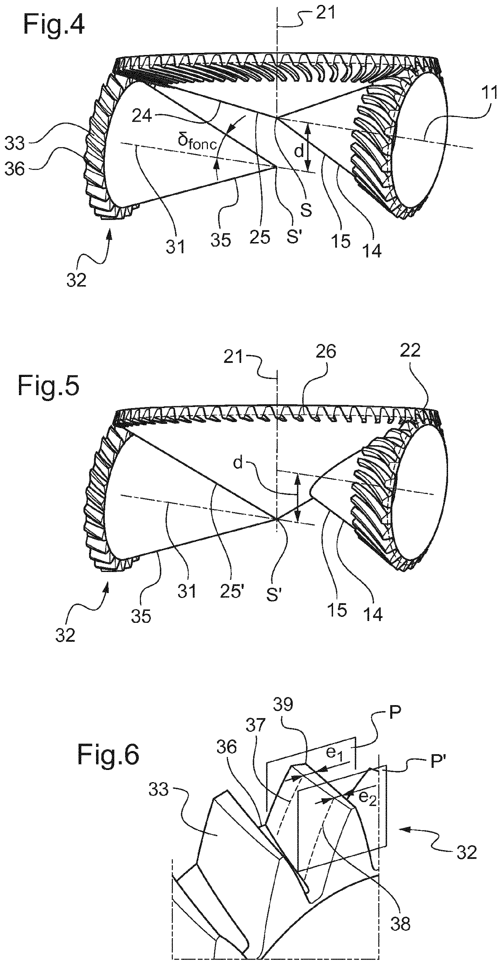

En outre tel que représenté à la figure 4, un tel pignon accessoire 32 présente une troisième surface primitive de fonctionnement 35 obtenue par un positionnement relatif des deuxième et troisième axes 21 et 31 permettant un engrènement du pignon accessoire 32 par la roue conique 22. Le troisième axe 31 n'est alors pas concourant simultanément avec les premier et deuxième axes 11 et 21 au sommet S.

Par suite, et contrairement à l'art antérieur, cette troisième surface primitive de fonctionnement 35 du pignon accessoire 32 est alors choisie distincte de la troisième surface primitive de définition 34 du pignon accessoire 32. Cette troisième surface primitive de fonctionnement 35 est définie par, d'une part un troisième sommet S' agencé à une intersection entre le troisième axe 31 et le deuxième axe 21 et, d'autre part un cercle primitif 36 du pignon accessoire 32.

La troisième surface primitive de définition 34 est ainsi définie par un quatrième sommet S" et par un demi-angle de définition δ_{def} au quatrième sommet S". Par ailleurs, la troisième surface primitive de fonctionnement 35 présente un demi-angle de fonctionnement δ_{fonc} au troisième sommet S'. Le demi-angle de définition δ_{def} est alors distinct du demi-angle de fonctionnement δ_{fonc}. La différence en valeur absolue entre le demi-angle de définition δ_{def} et le demi-angle de fonctionnement δ_{fonc} peut alors être comprise entre 1° et 60° et préférentiellement entre 10° et 60°.

Tel que représenté à la figure 5, le positionnement relatif des deuxième et troisième axes 21 et 31 permet alors de définir, lors de l'engrènement entre la roue conique 22 et le pignon accessoire 32, une quatrième surface primitive de fonctionnement 25' de forme conique se rapportant à la roue conique 22 et la troisième surface primitive de fonctionnement 35 de forme conique se rapportant au pignon accessoire 32.

Cette quatrième surface primitive de fonctionnement 25' est définie par, d'une part le troisième sommet S' agencé à une intersection entre le troisième axe 31 et le deuxième axe 21 et, d'autre part un cercle primitif 26 de la roue conique 22.

La deuxième surface primitive de fonctionnement 25 de la roue conique est alors distincte de cette quatrième surface primitive de fonctionnement 25'.

Il en ressort que ce troisième sommet S' est disjoint du sommet commun S et une distance d sépare alors le sommet commun S du troisième sommet S'. Une telle distance d est orientée le long du deuxième axe 21.

Telles que représentées à la figure 6, les dents 33 du pignon accessoire 32 présentent chacune une pluralité de sections transversales 37 et 38 de formes distinctes les unes des autres. Cette pluralité de sections transversales 37 et 38 est par ailleurs agencée respectivement dans des plans de coupe P, P' orientés sensiblement perpendiculairement par rapport au troisième axe 31.

Enfin, au moins au niveau d'une face externe de tête 39 des différentes dents 33 du pignon accessoire 32, chaque dent 33 présente une épaisseur de tête e₁, e₂ mesurée respectivement dans un plan de coupe P, P' orienté sensiblement perpendiculairement par rapport au troisième axe 31. Cette épaisseur de tête e₁, e₂ peut alors, telle que représentée, diminuer plus le plan de coupe P, P' est proche du quatrième sommet S" pour permettre d'optimiser la surface de contact des dents 33 du pignon accessoire 32 avec les dents 23 de la roue conique 22.

Bien entendu, selon une autre variante non représentée, cette épaisseur de tête e₁, e₂ peut également augmenter plus le plan de coupe P, P' est proche du quatrième sommet S".

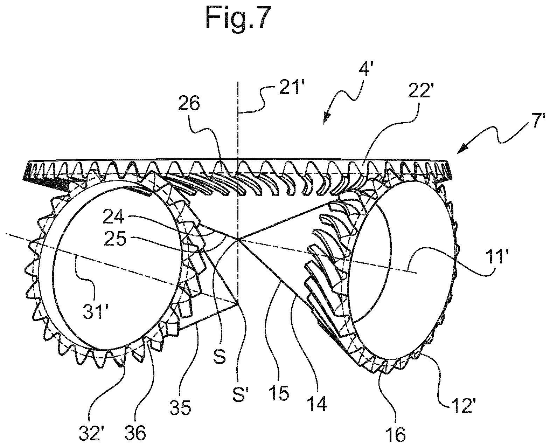

Tel que représenté à la figure 7, un second exemple de réalisation du système mécanique 4' de transmission est muni d'un engrenage conique 7' comportant un pignon de puissance 12'. Un tel pignon de puissance 12' est alors mobile en rotation autour d'un premier axe 11'. L'engrenage conique 7' comporte alors également une roue conique 22'. Cette roue conique 22' est quant à elle mobile en rotation autour d'un deuxième axe 21'.

Un tel système mécanique 4' comporte aussi un pignon accessoire 32' entraîné en rotation par la roue conique 22', un tel pignon accessoire 32' étant quant à lui mobile en rotation autour d'un troisième axe 31'.

Tels que représentés, les premier, deuxième et troisième axes 11', 21' et 31' sont agencés de manière non coplanaire les uns par rapport aux autres et permettent alors de modifier l'orientation angulaire du mouvement de rotation transmis par un tel système mécanique 4'.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Système mécanique (4, 4') de transmission d'un mouvement de rotation entre au moins deux arbres (10, 20) mobiles en rotation respectivement autour d'un premier axe (11, 11') et d'un deuxième axe (21, 21'), lesdits premier et deuxième axes (11, 11', 21, 21') étant concourants entre eux, ledit système mécanique (4, 4') comportant un engrenage conique (7, 7') composé d'un premier pignon conique (12, 12') muni de dents (13), mobile en rotation autour dudit premier axe (11, 11') et d'une roue conique (22, 22') munie de dents (23), mobile en rotation autour dudit deuxième axe (21, 21'), lesdites dents (13, 23) respectives dudit premier pignon conique (12, 12') et de ladite roue conique (22, 22') étant aptes à coopérer de façon complémentaire les unes avec les autres, ledit premier pignon conique (12, 12'), dit "pignon de puissance", présentant une première surface primitive de définition (14) de forme conique, ladite roue conique (22, 22') présentant une deuxième surface primitive de définition (24) de forme conique, un positionnement relatif desdits premier et deuxième axes (11, 11', 21, 21') concourants permettant de définir, lors de l'engrènement entre le pignon de puissance (12, 12') et la roue conique (22, 22'), une première surface primitive de fonctionnement (15) de forme conique se rapportant audit pignon de puissance (12, 12') et une deuxième surface primitive de fonctionnement (25) de forme conique se rapportant à ladite roue conique (22, 22'), lesdites première et deuxième surfaces primitives de fonctionnement (15, 25) étant définies respectivement par un sommet commun (S) agencé à l'intersection entre lesdits premier et deuxième axes (11, 11', 21, 21') et par un cercle correspondant à l'un des cercles primitifs (16, 26) respectifs dudit pignon de puissance (12, 12') et de ladite roue conique (22, 22'), lesdits cercles primitifs (16, 26) étant formés respectivement par des cercles tangents centrés sur les premier et deuxième axes (11, 11', 21, 21'), ladite première surface primitive de fonctionnement (15) étant choisie identique à ladite première surface primitive de définition (14) et ladite deuxième surface primitive de fonctionnement (25) étant choisie identique à ladite deuxième surface primitive de définition (24), ledit système mécanique (4, 4') comportant un autre pignon conique (32, 32') dit "pignon accessoire" muni de dents (33) engrenant avec les dents (23) de ladite roue conique (22, 22') pour transmettre un mouvement de rotation à un troisième arbre (30) mobile en rotation autour d'un troisième axe (31, 31'), ledit pignon accessoire (32, 32') présentant une troisième surface primitive de définition (34) de forme conique,
**caractérisé en ce que** ledit pignon accessoire (32, 32') présente une troisième surface primitive de fonctionnement (35) obtenue par un positionnement relatif desdits deuxième et troisième (21, 21', 31, 31') permettant un engrènement dudit pignon accessoire (32, 32') par ladite roue conique (22, 22'), ladite troisième surface primitive de fonctionnement (35) dudit pignon accessoire (32, 32') étant choisie distincte de ladite troisième surface primitive de définition (34) dudit pignon accessoire (32, 32'), ladite troisième surface primitive de fonctionnement (35) étant définie par, d'une part un troisième sommet (S') agencé à une intersection entre ledit troisième axe (31, 31') et ledit deuxième axe (21, 21') et, d'autre part un cercle primitif (36) dudit pignon accessoire (32, 32'), ledit troisième sommet (S') étant disjoint dudit sommet commun (S).

2. Système mécanique selon la revendication 1,
**caractérisé en ce que** ladite forme conique de ladite troisième surface primitive de définition (34) est définie par un quatrième sommet (S") et par un demi-angle de définition (δ_{def}) audit quatrième sommet (S"), ladite troisième surface primitive de fonctionnement (35) présentant un demi-angle de fonctionnement (δ_{fonc}) audit troisième sommet (S'), ledit demi-angle de définition (δ_{def}) étant distinct dudit demi-angle de fonctionnement (δ_{fonc}).

3. Système mécanique selon la revendication 2,
**caractérisé en ce qu'**une différence en valeur absolue entre ledit demi-angle de définition (δ_{def}) et ledit demi-angle de fonctionnement (δ_{fonc}) est comprise entre 1° et 60°.

4. Système mécanique selon la revendication 3,
**caractérisé en ce que** ladite différence en valeur absolue entre ledit demi-angle de définition (δ_{def}) et ledit demi-angle de fonctionnement (δ_{fonc}) est préférentiellement comprise entre 10° et 60°.

5. Système mécanique selon l'une quelconque des revendications 1 à 4,
**caractérisé en ce que** lesdites dents (33) dudit pignon accessoire (32, 32') présentent chacune une pluralité de sections transversales (37, 38) de formes distinctes les unes des autres, ladite pluralité de sections transversales (37, 38) étant agencée respectivement dans des plans de coupe (P, P') orientés sensiblement perpendiculairement audit troisième axe (31, 31').

6. Système mécanique selon la revendication 5,
**caractérisé en ce qu'**au moins au niveau d'une face externe de tête (39) desdites dents (33) dudit pignon accessoire (32, 32'), chaque dent (33) présente une épaisseur de tête (e₁, e₂) mesurée respectivement dans un plan de coupe (P, P') orienté sensiblement perpendiculairement par rapport audit troisième axe (31, 31'), ladite épaisseur de tête e₁, e₂ variant plus le plan de coupe (P, P') considéré est proche dudit quatrième sommet (S").

7. Système mécanique selon l'une quelconque des revendications 1 à 6,
**caractérisé en ce que** lesdits premier et deuxième axes (11, 11', 21,21') sont orthogonaux.

8. Système mécanique selon l'une quelconque des revendications 1 à 7,
**caractérisé en ce que** lesdits deuxième et troisième axes (21, 21', 31, 31') sont orthogonaux.

9. Système mécanique selon l'une quelconque des revendications 1 à 8,
**caractérisé en ce que** lesdits premier et troisième axes (11, 31) sont parallèles.

10. Système mécanique selon l'une quelconque des revendications 1 à 9,
**caractérisé en ce que** lesdits premier, deuxième et troisième axes (11, 21, 31) sont coplanaires.

11. Système mécanique selon l'une quelconque des revendications 1 à 9,
**caractérisé en ce que** lesdits premier, deuxième et troisième axes (11', 21', 31') sont non coplanaires.

12. Aéronef (1) comportant au moins un moteur (2) et au moins un rotor (3) pour réaliser une propulsion et/ou une sustentation dudit aéronef (1),
**caractérisé en ce que** ledit aéronef (1) comporte au moins un système mécanique (4, 4') selon l'une quelconque des revendications 1 à 11, ledit système mécanique (4, 4') permettant de transmettre un mouvement de rotation entre un arbre moteur (5) dudit au moins un moteur (2) et un arbre récepteur (6) dudit au moins un rotor (3).

## Patentansprüche

1. Mechanisches System (4, 4') zum Übertragen einer Drehbewegung zwischen mindestens zwei Wellen (10, 20), die jeweils um eine erste Achse (11, 11') und eine zweite Achse (21, 21') drehbar beweglich sind, wobei die erste und zweite Achse (11, 11', 21, 21') zueinander konvergent sind,
wobei das mechanische System (4, 4') ein Kegelgetriebe (7, 7') umfasst, das aus einem ersten Kegelrad (12, 12') mit Zähnen (13), das um die erste Achse (11, 11') drehbar beweglich ist, und einem Kegelrad (22, 22') mit Zähnen (23) besteht, das um die zweite Achse (21, 21') drehbar beweglich ist,
wobei die Zähne (13, 23) des ersten Kegelrades (12, 12') und des Kegelrades (22, 22') eingerichtet sind, um komplementär miteinander zusammenzuwirken,
wobei das erste Kegelrad (12, 12'), als "Antriebsrad" bezeichnet, eine erste Nenn-Wälzfläche (14) von kegelförmiger Gestalt aufweist,
wobei das Kegelrad (22, 22') eine zweite Nenn-Wälzfläche (24) von kegelförmiger Gestalt aufweist,
wobei eine relative Positionierung der ersten und der zweiten konvergierenden Achse (11, 11', 21, 21') es ermöglicht, wenn das Antriebsrad (12, 12') mit dem Kegelrad (22, 22') in Eingriff steht, eine erste Betriebs-Wälzfläche (15) von kegelförmiger Gestalt, die sich auf das Antriebsrad (12, 12') bezieht, und eine zweite Betriebs-Wälzfläche (25) von kegelförmiger Gestalt, die sich auf das Kegelrad bezieht, zu definieren,
wobei die erste und die zweite Betriebs-Wälzfläche (15, 25) jeweils durch einen gemeinsamen Scheitelpunkt (S), der am Schnittpunkt zwischen der ersten und zweiten Achse (11, 11', 21, 21') angeordnet ist, und durch einen Kreis definiert sind, der einem der jeweiligen Wälzkreise (16, 26) des Antriebsrades (12, 12') und des Kegelrades (22, 22') entspricht,
wobei die Wälzkreise (16, 26) jeweils durch Tangentenkreise gebildet sind, die auf der ersten und zweiten Achse (11,11', 21, 21') zentriert sind,
wobei die erste Betriebs-Wälzfläche (15) identisch mit der ersten Nenn-Wälzfläche (14) und die zweite Betriebs-Wälzfläche (25) identisch mit der zweiten Nenn-Wälzfläche (24) gewählt sind;
wobei das mechanische System (4, 4') ein als "Hilfsrad" bezeichnetes weiteres Kegelrad (32, 32') umfasst, das mit Zähnen (33) versehen ist, die mit den Zähnen (23) des Kegelrades (22, 22') in Eingriff stehen, um eine Drehbewegung auf eine dritte Welle (30) zu übertragen, die um eine dritte Achse (31, 31') drehbar beweglich ist,
**dadurch gekennzeichnet, dass**
das Hilfsritzel (32, 32') eine dritte Betriebs-Wälzfläche (35) aufweist, die durch eine relative Positionierung der zweiten und dritten **Achse** (21, 21', 31, 31, 31') erhalten wird, die den Eingriff des Kegelrades (22, 22') am Hilfsrad (32, 32') ermöglicht,
die dritte Betriebs-Wälzfläche (35) des Hilfsrades (32, 32') verschieden von der dritten Nenn-Wälzfläche (34) des Hilfsrades (32, 32') gewählt ist,
die dritte Betriebs-Wälzfläche (35) einerseits durch einen dritten Scheitelpunkt (5') an einem Schnittpunkt zwischen der dritten Achse (31, 31') und der zweiten Achse (21, 21') und andererseits durch einen Wälzkreis (36) des Hilfsrades (32, 32') definiert ist,
wobei der dritte Scheitelpunkt (5') von dem gemeinsamen Scheitelpunkt (S) verschieden ist.

2. Mechanisches System nach Anspruch 1,
**dadurch gekennzeichnet, dass** die kegelförmige Gestalt der dritten Nenn-Wälzfläche (34) durch einen vierten Scheitelpunkt (S") und durch einen Nenn-Öffnungswinkel (δ_{def}) an dem vierten Scheitelpunkt (S") definiert ist,
dass die dritte Betriebs-Wälzfläche (35) einen Betriebs-Öffnungswinkel (δ_{fonc}) an dem dritten Scheitelpunkt (3') aufweist,
und dass der Nenn-Öffnungswinkel (δ_{def}) von dem Betriebs-Öffnungswinkel (δ_{fonc}) verschieden ist.

3. Mechanisches System nach Anspruch 2,
**dadurch gekennzeichnet, dass** eine Betragsdifferenz zwischen dem Nenn-Öffnungswinkel (δ_{def}) und dem Betriebs-Öffnungswinkel (δ_{fonc}) zwischen 1° und 60° liegt.

4. Mechanisches System nach Anspruch 3,
**dadurch gekennzeichnet, dass** die Betragsdifferenz zwischen dem Nenn-Öffnungswinkel (δ_{def}) und dem Betriebs-Öffnungswinkel (δ_{fonc}) vorzugsweise zwischen 10° und 60° liegt.

5. Mechanisches System nach einem der Ansprüche 1 bis 4,
**dadurch gekennzeichnet, dass** die Zähne (33) des Hilfsrades (32, 32') jeweils eine Mehrzahl von Querschnitten (37, 38) in voneinander verschiedenen Gestalten aufweisen,
wobei die mehreren Querschnitte (37, 38) jeweils in Schnittebenen (P, P') angeordnet sind, die im Wesentlichen senkrecht zu der dritten Achse (31, 31') ausgerichtet sind.

6. Mechanisches System nach Anspruch 5,
**dadurch gekennzeichnet, dass** mindestens an einer äußeren Kopffläche (39) der Zähne (33) des Hilfsrades (32, 32') jeder Zahn (33) eine Kopfdicke (e₁, e₂), gemessen jeweils in einer Schnittebene (P, P'), die im Wesentlichen senkrecht zu der dritten Achse (31, 31') ausgerichtet ist, aufweist, wobei die Kopfdicke e₁, e₂ sich ändert, je näher die betrachtete Schnittebene (P, P') an dem vierten Scheitelpunkt (S") liegt.

7. Mechanisches System nach einem der Ansprüche 1 bis 6,
**dadurch gekennzeichnet, dass** die erste und die zweite Achse (11, 11', 21, 21') orthogonal sind.

8. Mechanisches System nach einem der Ansprüche 1 bis 7,
**dadurch gekennzeichnet, dass** die zweite und die dritte Achse (21, 21', 31, 31') orthogonal sind.

9. Mechanisches System nach einem der Ansprüche 1 bis 8,
**dadurch gekennzeichnet, dass** die erste und die dritte Achse (11, 31) parallel sind.

10. Mechanisches System nach einem der Ansprüche 1 bis 9,
**dadurch gekennzeichnet, dass** die erste, die zweite und die dritte Achse (11, 21, 31) koplanar sind.

11. Mechanisches System nach einem der Ansprüche 1 bis 9,
**dadurch gekennzeichnet, dass** die erste, die zweite und die dritte Achse (11', 21', 31') nicht koplanar sind.

12. Luftfahrzeug (1) mit mindestens einem Motor (2) und mindestens einem Rotor (3) zum Ausführen des Antriebs und/oder Anhebens des Luftfahrzeugs (1),
**dadurch gekennzeichnet, dass** das Luftfahrzeug (1) mindestens ein mechanisches System (4, 4') nach einem der Ansprüche 1 bis 11 umfasst, wobei das mechanische System (4, 4') die Übertragung einer Drehbewegung zwischen einer Motorwelle (5) des mindestens einen Motors (2) und einer Antriebswelle (6) des mindestens einen Rotors (3) ermöglicht.

## Claims

1. Mechanical system (4, 4') for transmitting a rotary motion between at least two shafts (10, 20) that are rotatable about a first axis (11, 11') and a second axis (21, 21'), respectively, the first and second axes (11, 11', 21, 21') intersecting with one another, the mechanical system (4, 4') comprising a bevel gear set (7, 7') consisting of a first bevel gear (12, 12') that has teeth (13) and is rotatable about the first axis (11, 11') and a bevel wheel (22, 22') that has teeth (23) and is rotatable about the second axis (21, 21'),
the respective teeth (13, 23) of the first bevel gear (12, 12') and of the bevel wheel (22, 22') being suitable for interacting with one another in a complementary manner, the first bevel gear (12, 12'), referred to as the power gear, having a first conical defining pitch surface (14), the bevel wheel (22, 22') having a second conical defining pitch surface (24),
the intersecting first and second axes (11, 11', 21, 21') being relatively positioned so as to allow a first conical operating pitch surface (15) relating to the power gear (12, 12') and a second conical operating pitch surface (25) relating to the bevel wheel (22, 22') to be defined when the power gear (12, 12') and the bevel wheel (22, 22') engage,
the first and second operating pitch surfaces (15, 25) being defined, respectively, by a common vertex (S) arranged at the intersection between the first and second axes (11, 11', 21, 21') and by a circle corresponding to one of the respective pitch circles (16, 26) of the power gear (12, 12') and of the bevel wheel (22, 22'),
the pitch circles (16, 26) being formed by tangent circles centred on the first and second axes (11, 11', 21, 21'), respectively, the first operating pitch surface (15) being selected so as to be identical to the first defining pitch surface (14) and the second operating pitch surface (25) being selected so as to be identical to the second defining pitch surface (24),
the mechanical system (4, 4') comprising another bevel gear (32, 32'), referred to as the accessory gear, that has teeth (33) which mesh with the teeth (23) of the bevel wheel (22, 22') in order to transmit a rotary motion to a third shaft (30) that is rotatable about a third axis (31, 31'), the accessory gear (32, 32') having a third conical defining pitch surface (34), **characterised in that** the accessory gear (32, 32') has a third operating pitch surface (35) obtained by the second and third axes (21, 21', 31, 31') being relatively positioned so as to allow the accessory gear (32, 32') to be engaged by the bevel wheel (22, 22'), the third operating pitch surface (35) of the accessory gear (32, 32') being selected so as to be different from the third defining pitch surface (34) of the accessory gear (32, 32'), the third operating pitch surface (35) being defined by a third vertex (S') arranged at an intersection between the third axis (31, 31') and the second axis (21, 21') and by a pitch circle (36) of the accessory gear (32, 32'), the third vertex (S') being separate from the common vertex (S).

2. Mechanical system according to claim 1, **characterised in that** the conical shape of the third defining pitch surface (34) is defined by a fourth vertex (S") and by a defining half-angle (δ_{def}) at the fourth vertex (S"), the third operating pitch surface (35) having an operating half-angle (δ_{fonc}) at the third vertex (S'), the defining half-angle (δ_{def}) being different from the operating half-angle (δ_{fonc}).

3. Mechanical system according to claim 2, **characterised in that** the absolute value of a difference between the defining half-angle (δ_{def}) and the operating half-angle (δ_{fonc}) is between 1° and 60°.

4. Mechanical system according to claim 3, **characterised in that** the absolute value of the difference between the defining half-angle (δ_{def}) and the operating half-angle (δ_{fonc}) is preferably between 10° and 60°.

5. Mechanical system according to any of claims 1 to 4, **characterised in that** the teeth (33) of the accessory gear (32, 32') each have a plurality of cross sections (37, 38) of mutually different shapes, the plurality of cross sections (37, 38) being arranged in respective section planes (P, P') which are oriented substantially perpendicularly to the third axis (31, 31').

6. Mechanical system according to claim 5, **characterised in that**, at least at an external top land (39) of the teeth (33) of the accessory gear (32, 32'), each tooth (33) has land thicknesses (e₁, e₂) measured in respective section planes (P, P') which are oriented substantially perpendicularly to the third axis (31, 31'), the land thickness e₁, e₂ varying to a greater degree the closer the relevant section plane (P, P') is to the fourth vertex (S").

7. Mechanical system according to any of claims 1 to 6, **characterised in that** the first and second axes (11, 11', 21, 21') are orthogonal.

8. Mechanical system according to any of claims 1 to 7, **characterised in that** the second and third axes (21, 21', 31, 31') are orthogonal.

9. Mechanical system according to any of claims 1 to 8, **characterised in that** the first and third axes (11, 31) are parallel.

10. Mechanical system according to any of claims 1 to 9, **characterised in that** the first, second and third axes (11, 21, 31) are coplanar.

11. Mechanical system according to any of claims 1 to 9, **characterised in that** the first, second and third axes (11', 21', 31') are not coplanar.

12. Aircraft (1) comprising at least one engine (2) and at least one rotor (3) for providing the aircraft (1) with propulsion and/or lift, **characterised in that** the aircraft (1) comprises at least one mechanical system (4, 4') according to any of claims 1 to 11, the mechanical system (4, 4') allowing a rotary motion to be transmitted between a drive shaft (5) of the at least one engine (2) and a driven shaft (6) of the at least one rotor (3).
